# EUROPEAN PATENT SPECIFICATION

(11) **EP 2 448 982 B1**
(45) Date of publication and mention of the grant of the patent: **05.11.2014**
(21) Application number: 10727733.7
(22) Date of filing: 25.06.2010
(51) Int. Cl.: C08F 220/18, C08L 35/02

(54) **PROCESS FOR THE PREPARATION OF RADIATION CURABLE COMPOSITIONS**
STRAHLUNGSHÄRTBARE ZUSAMMENSETZUNGEN
COMPOSITIONS DURCISSABLES À RAYONNEMENT

(30) Priority: 30.06.2009 EP 09164179
(43) Date of publication of application: 09.05.2012
(73) Proprietor: Allnex Belgium, S.A., 1070 Brussels (BE)
(72) Inventor: MILLER, Chris, W., Benton, Kentucky 42025 (US); WALDO, Rosalyn M., Woodstock Georgia 30189 (US)
(74) Representative: Schoofs, Hilde
(86) International application number: PCT/EP2010/059046
(87) International publication number: WO 2011/000783

(56) References cited:
- WO-A1-2008/006109
- DE-A1- 2 114 773
- US-A- 3 549 583

## Description

The present invention relates to a process for the preparation of radiation curable compositions comprising radiation curable (meth)acrylic copolymers as well as their use for making coatings, varnishes, adhesives and inks.

Solvent processes are widely known methods for production of radiation curable compositions comprising (meth)acrylic copolymers and are described for example in DE 2114773. However, solvent processes suffer from a number of major shortcomings. Many solvents are flammable and toxic to varying degrees and their use contributes to air pollution and fire hazards. Furthermore, solvent processes are characterized by longer production time and higher energy consumption. More importantly, such processes cannot remove solvent completely under normal production conditions and the end-product always contains some residual solvents which can result in not only the emission of solvent vapors during application but also poorer performance. Solventless process is more desirable for production of radiation curable compositions because it involves 100% convertible materials with a simpler, safer and more economical manufacture practice. However, when the presence of a solvent is avoided, one is generally limited to the preparation of low molecular weight oligomers or oligomers characterized by a low softening point.

In accordance with the present invention, the applicant has now discovered a new process for the preparation of radiation curable compositions that overcomes the above cited disadvantages.

The present invention therefore relates to a novel process for the preparation of a radiation curable composition comprising at least one radiation curable (meth)acrylic copolymer A and at least one (meth)acrylated epoxy compound B, said process comprising:
- the preparation of a copolymer P by copolymerization of monomers comprising :
   (i) from 0.1 to 50 mole% of at least one epoxy (meth)acrylate (a1), and
   (ii) from 50 to 99.9 mole% of at least one other copolymerizable monomer (m) different from epoxy (meth)acrylate (a1)
      in the presence of at least one non-copolymerizable epoxy compound (b1) and
- further reacting copolymer P thereby obtained and the non-copolymerizable epoxy compound (b1) with at least one carboxylic (meth)acrylate (a3).

The term "(meth)acryl" used in the present invention is meant to encompass both the terms "acryl" and "methacryl". The term "(meth)acrylate" used in the present invention is meant to encompass both acrylate and methacrylate compounds, that are compounds that comprise at least one acrylate (CH2=CHCOO-) or methacrylate (CH2=CCH3COO-) group, as well as mixtures thereof.

The epoxy (meth)acrylate (a1) is selected from compounds having at least one (meth)acryl group and at least one epoxy group, such as glycidyl(meth)acrylate, 2-methylglycidyl(meth)acrylate and epoxycyclohexyl(meth)acrylate. The epoxy (meth)acrylate (a1) is preferably glycidyl(meth)acrylate, more preferably glycidylmethacrylate.

The carboxylic (meth)acrylate(s) (a3) are compounds comprising at least one carboxylic acid group and at least one (meth)acrylate group. Suitable carboxylic (meth)acrylates include (meth)acrylic acid and β-carboxyethyl(meth)acrylate. The carboxylic (meth)acrylate (a3) is more preferably (meth)acrylic acid, most preferably acrylic acid.

The other copolymerizable monomer (m) is preferably selected from (meth)acrylates (m1), vinylic compounds (m2) and mixtures thereof. Examples of such monomers include methyl(meth)acrylate, 2-ethyl(meth)acrylate, propyl(meth)acrylate, n-butyl(meth)acrylate, iso-butyl(meth)acrylate, tert-butyl(meth)acrylate, ethylhexyl(meth)acrylate, octyl and decyl(meth)acrylates and mixtures thereof, stearyl(meth)acrylate, lauryl(meth)acrylate, iso-decyl(meth)acrylate, benzyl(meth)acrylate, phenyl(meth)acrylate, hydroxyethyl(meth)acrylate, hydroxypropyl(meth)acrylate, hydroxy-butyl(meth)acrylate, styrene, α-methylstyrene, vinyltoluene, (meth)acrylonitrile, vinylacetate, vinylpropionate, (meth)acrylamide, methylol(meth)acrylamide, vinylchloride, ethylene, propylene, C4-20 olefins and α-olefins. The (meth)acrylates (m1) are preferably selected from linear and branched aliphatic alkyl(meth)acrylates, more preferably those wherein the alkyl group comprises from 1 to not more than 24, preferably not more than 12, carbon atoms in the alkyl chain. Particularly preferred are octyl and decyl (meth)acrylates and mixtures thereof. The (meth)acrylate (m1) preferably comprises at least 50 mole% of one or more linear alkyl(meth)acrylate having from 8 to 12 carbon atoms in the alkyl chain. The vinylic compound (m2) is preferably styrene.

The (meth)acrylic copolymer A is prepared by copolymerizing in a first step (the "copolymerization step") the epoxy (meth)acrylate(s) (a1) and the copolymerizable monomer(s) (m) in the presence of the non-copolymerizable epoxy compound(s) (b1), so that a copolymer P comprising epoxy groups derived from epoxy (meth)acrylate(s) (a1) is obtained, followed by the reaction in a subsequent step (the "esterification step") with carboxylic (meth)acrylate(s) (a3) so that at least part of the epoxy groups of the copolymer P and of the non-copolymerizable epoxy compound(s) (b1) react with the carboxylic acid groups present on the carboxylic (meth)acrylate(s) (a3) forming the (meth)acrylic copolymer A containing (meth)acrylate groups and the (meth)acrylated epoxy compound(s) B. Copolymer P may be a random, alternating or block copolymer. It is preferably a random copolymer.

The process according to the invention generally makes use of:
(i) from 5 to 60 % by weight of non-copolymerizable epoxy compound (b1), and
(ii) from 40 to 95 % by weight of monomers comprising the epoxy (meth)acrylate (a1) and other copolymerizable monomer(s) (m)
   based on the total weight of non-copolymerizable epoxy compound (b1) and monomers comprising at least one epoxy (meth)acrylate (a1) and at least one other copolymerizable monomer (m).

The equivalent ratio of carboxylic (meth)acrylate (a3) to the total amount of epoxy groups provided by copolymer P and the non-copolymerizable epoxy compound (b1) is preferably from 0.5 to 1.0, more preferably from 0.7 to 1.0, most preferably from 0.85 to 1.0.

The copolymerization in the first step may take place by free-radical copolymerization.

This may take place in a manner known to the skilled person by conventional methods, particularly by free-radical polymerization using radical initiators. Examples of suitable radical initiators include peroxides, such as benzoyl peroxide, azo compounds, such as azo-bis-isobutyronitrile, and the like. The initiators may be used, for example, in amounts from 0.1 to 4.0 % by weight of the starting monomers.

To achieve a good control of the molecular weight and its distribution, a chain transfer agent, preferably of the mercaptan type, such as n-dodecylmercaptan, tert-dodecanethiol, iso-octylmercaptan, noctylmercaptan or of the carbon halide type, such as carbon tetrabromide, bromotrichloromethane, can also be added in the course of the reaction. The chain transfer agent is generally used in amounts of up to 10 % by weight of the monomers used in the copolymerisation.

The copolymerisation is generally carried out at a temperature of 100 to 150 °C under an inert gas atmosphere.

The reaction in the subsequent esterification step may take place at temperatures from 60 to 135°C without catalyst or using catalysts, for example those known to catalyze esterification through epoxy/carboxy reactions, such as chromium compounds, tertiary amines, phosphines and the like.

The non-copolymerizable epoxy compounds (b1) used in the process are preferably epoxides that do not distill out of the reaction mixture under the conditions of the free-radical polymerization. By non-copolymerizable epoxide or epoxy compound is meant to designate in the present invention an epoxide that is essentially inert under the conditions of the free-radical copolymerization, especially that does not contain (meth)acrylate or other vinylic groups that permit the copolymerization with (meth)acrylates, especially under free-radical polymerization conditions.

The non-copolymerizable epoxy compound (b1) is a compound comprising one or more epoxy groups like for instance epoxidized olefins, epoxidized phenol-formaldehyde copolymers (also known as epoxidized Novolac® resins), epoxidized natural oils, mono- and polyglycidyl esters, mono- and polyglycidyl ethers and mixtures thereof.

According to a first variant of the invention, the epoxide is a compound comprising 1 to 5, preferably 1 to 3, more preferably 1 or 2, epoxy groups per molecule. The molecular weight of such compounds is preferably below 1000, more preferably below 500. The epoxides are generally selected from epoxidized olefins, glycidyl esters of saturated or unsaturated carboxylic acids, glycidyl ethers of aliphatic or aromatic polyols, and mixtures thereof. Preferred are the aliphatic glycidyl ethers, especially those wherein the alkyl chain comprises from 6 to 24 carbon atoms, more preferably from 8 to 18 carbon atoms. Also preferred are the glycidyl esters of saturated and unsaturated carboxylic acids, especially the monoglycidyl esters of long chain alkyl carboxylic acids wherein the alkyl chain comprises from 6 to 24 carbon atoms, more preferably from 8 to 18 carbon atoms. Particularly preferred are the glycidyl esters of long chain alkyl carboxylic acids wherein the alkyl chain is branched.

Examples of such compounds are glycidyl ester of neodecanoic acid (also known as Cardura®E-10P), butyl glycidyl ether, cresyl glycidyl ether, phenyl glycidyl ether, nonylphenyl glycidyl ether, p-tert-butylphenyl glycidyl ether, 2-ethylhexyl glycidyl ether, C8-10 alkyl glycidyl ethers, C12-14 alkyl glycidyl ethers. Preferred are aliphatic compounds. Particularly preferred is the glycidyl ester of neodecanoic acid. According to a second variant of the invention, the (meth)acrylic copolymer A is prepared in the presence of one or more epoxidized phenol-formaldehyde copolymers or epoxidized natural oils, preferably in the presence of one or more epoxidized natural oils.

By epoxidized natural oil is meant to designate in the present invention any naturally occurring oil which has been modified so that it comprises at least one epoxy group. Examples of natural oils include soybean oil, linseed oil, perilla oil, fish oil, dehydrated castor oil, tung oil, coconut oil, corn oil, cottonseed oil, olive oil, palm oil, palm kernel oil, peanut oil, sunflower oil, safflower oil, castor oil. Combination of oils may be used. Linseed oil, soybean oil or their mixtures are preferred.

According to a third variant of the invention, the (meth)acrylic copolymer A is prepared in a mixture of one or more epoxy compounds described in the first variant and one or more epoxy compounds described in the second variant.

The process according to the invention generally takes place in the absence of substantial amounts of solvent, usually less than 1 % of solvent relative to the total amount of reagents.

The process according to the invention permits to obtain radiation curable compositions comprising:
(i) from 60 to 98 % by weight of (meth)acrylic copolymer A, and
(ii) from 2 to 40 % by weight of (meth)acrylated epoxy compound B
based on the total weight of (meth)acrylic copolymer A and of (meth)acrylated epoxy compound B.

Compositions obtained by the process according to the invention typically comprise less than 1 % by weight of solvent, advantageously less than 0.5 % by weight. The compositions obtained by the process according to the invention do not give rise to the emission of solvent vapors during application and do not suffer from the negative effect of the presence of solvent residues on the performances. Their production is more efficient in terms of production time, energy consumption and is safer. Furthermore, the composition obtained by the process of the present invention is not limited to (meth)acrylic copolymers A having a low molecular weight or a low softening point.

The present invention also relates to radiation curable compositions obtained by the process according to the invention as previously described comprising:
(i) from 60 to 98 % by weight of (meth)acrylic copolymer A, and
(ii) from 2 to 40 % by weight of (meth)acrylated epoxy compound B
based on the total weight of (meth)acrylic copolymer A and of (meth)acrylated epoxy compound B.

The process according to the invention may also contain a further step wherein the compositions such as described here above are mixed with at least one radiation curable compound C to obtain final radiation curable compositions comprising:
(i) from 15 to 95 % by weight of (meth)acrylic copolymer A, and
(ii) from 2 to 40 % by weight of (meth)acrylated epoxy compound B, and
(iii) from 2 to 40 % by weight of at least one radiation curable compound different from (meth)acrylic copolymer A and (meth)acrylated epoxy compound B
based on the total weight of the composition.

The present invention also relates to a process for preparing such compositions as well as the compositions thereby obtained.

The composition preferably comprises from 2 to 20 % by weight of at least one (meth)acrylated epoxy compound B obtained from the esterification reaction of (meth)acrylic acid with an epoxidized natural oil and/or from 2 to 20 % by weight of at least one (meth)acrylated epoxy compound B obtained from the esterification with (meth)acrylic acid of glycidyl esters of saturated and unsaturated carboxylic acids, especially the glycidyl esters of long chain alkyl carboxylic acids wherein the alkyl chain comprises from 6 to 24 carbon atoms. As described in the present invention, the esterification reaction of the epoxidized natural oil and/or glycidyl ethers or esters preferably takes place at the same time as the reaction of the copolymer P with the carboxylic (meth)acrylate (a3). Most preferably the composition comprises from 2 to 20 % by weight of (meth)acrylated epoxy compound B obtained from the esterification with (meth)acrylic acid of glycidyl esters of saturated and unsaturated carboxylic acids, especially the glycidyl esters of long chain alkyl carboxylic acids wherein the alkyl chain comprises from 6 to 24 carbon atoms.

Compound(s) C can be added before, during and/or after the esterification step of the process of the present invention, either partially or completely. Compound C can be a (meth)acrylated epoxy compound. Compound C is preferably selected from (meth)acrylated oligomers, especially those different from (meth)acrylic copolymer A, and from (meth)acrylated monomers and from mixtures thereof.

By (meth)acrylated oligomer is meant to designate in the present invention compounds having a number average molecular weight of from 250 to 25000 and having at the chain ends or laterally along the chains, at least one, preferably at least two, (meth)acrylate groups. The average molecular weight of the (meth)acrylated oligomer preferably does not exceed 10000, more preferably not 4000.

The (meth)acrylated oligomers are generally selected from the group of polyester (meth)acrylate oligomers, polyether (meth)acrylate oligomers, epoxy (meth)acrylate oligomers, polycarbonate (meth)acrylate oligomers, urethane (meth)acrylate oligomers, (meth)acrylated (meth)acrylic oligomers, amine (meth)acrylate oligomers and any combination thereof.

Polyester (meth)acrylate oligomers are well known. These (meth)acrylated polyesters can be obtained by reacting a hydroxyl group-containing polyester backbone with (meth)acrylic acid, or by reacting a carboxyl group-containing polyester backbone with a hydroxyalkyl (meth)acrylate such as for example 2-hydroxyethyl acrylate, 2- or 3-hydroxypropyl acrylate, etc. or with glycidyl methacrylate. The polyester backbone can be obtained in a conventional manner by polycondensation of at least one polyhydroxy alcohol, such as ethylene glycol, propylene glycol, butanediol, neopentyl glycol, hexanediol, trimethylolpropane, bisphenol A, pentaerythritol, etc, or/and the ethoxylates and/or propoxylates thereof, with at least one polycarboxylic acid or anhydride thereof such as adipic acid, phthalic acid, isophthalic acid, terephthalic acid, trimellitic acid, etc. By using unsaturated compounds for the polyester synthesis, such as for example fumaric acid, maleic acid, itaconic acid, etc., polyesters bearing both (meth)acrylic and ethylenic unsaturations in the polymer chain, can be obtained. In addition polylactones can be used as polyester backbone. For example poiy(ε-caprolactone) obtained by ring-opening polymerization of ε-caprolactone, optionally in the presence of one or more polyhydroxy alcohol, can be used. Preferred are the polyester (meth)acrylate oligomers commercialized as EBECRYL®450, EBECRYL®657, EBECRYL®860, and EBECRYL®870.

Polyether (meth)acrylate oligomers are known: they can be prepared by esterification of hydroxyfunctional polyethers with (meth)acrylic acid. Hydroxyfunctional polyethers can be obtained by ring-opening homo- or copolymerization of cyclic ethers such as tetrahydrofuran, ethylene oxide and/or propylene oxide or can be prepared by reacting polyhydroxy alcohols with ethylene and/or propylene oxide.

Polycarbonate (meth)acrylate oligomers are known. They can be prepared by esterification of hydroxyfunctional polycarbonates with (meth)acrylic acid.

Urethane (meth)acrylate oligomers are known as well. Urethane (meth)acrylate oligomers can be prepared by reacting a di- and/or polyisocyanate, such as hexamethylene-diisocyanate, isophoronediisocyanate, toluene-diisocyanate, with an hydroxyl functional (meth)acrylate. Use can be made exclusively of hydroxyl functional (meth)acrylates such as those mentioned above, but in order to extend the chain, mono- or polyhydroxy alcohols can also be added, such as those mentioned above for the synthesis of polyesters and/or polyesters, polyethers or polycarbonates containing hydroxyl groups. Preferably, the urethane (meth)acrylate oligomers have a number average molecular weight of less than 5,000.

Most preferred are urethane acrylates commercialized as EBECRYL®230, EBECRYL®270 and EBECRYL®4883.

By epoxy (meth)acrylate oligomers is meant to designate the (meth)acrylic esters of epoxides, preferably polyepoxides, i.e. compounds comprising at least one, preferably at least two epoxide functions. Epoxy (meth)acrylate oligomers are generally obtained from the esterification reaction of (meth)acrylic acid with epoxides. The epoxides are generally chosen from epoxidized olefins, glycidyl esters of saturated or unsaturated carboxylic acids, glycidyl ethers of aromatic or aliphatic alcohols or polyols and from cycloaliphatic polyepoxides. Preferred epoxides are diglycidylethers of aromatic and aliphatic diols and cycloaliphatic diepoxides such as diglycidyl ether of bisphenol-A, diglycidyl ether of bisphenol-F, diglycidylether of poly(ethylene oxide-co-propylene oxide), diglycidylether of polypropylene oxide, diglycidylether of hexanediol, diglycidylether of butanediol. Particularly preferred is diglycidyl ether of bisphenol-A. Also epoxidized natural oils or epoxidized phenol-formaldehyde copolymers can be used. Examples of natural oils include soybean oil, linseed oil, perilla oil, fish oil, dehydrated castor oil, tung oil, coconut oil, corn oil, cottonseed oil, olive oil, palm oil, palm kernel oil, peanut oil, sunflower oil, safflower oil, castor oil.

(Meth)acrylated (meth)acrylic oligomers can be obtained by first preparing a (meth)acrylic copolymer by copolymerization of (meth)acrylate monomers such as butyl acrylate with monomers containing pendant acid, anhydride, hydroxy or glycidyl groups and by then reacting this copolymer with an unsaturated monomer. For example, a glycidyl group-containing copolymer can first be prepared by copolymerizing functionalized monomers such as glycidyl (meth)acrylate with other (meth)acrylate monomers, the said glycidyl group-containing polymer being usually reacted in a second step with (meth)acrylic acid. When the functionalized monomers are (meth)acrylic acid, the carboxyl group-containing polymer is generally reacted in the second step with glycidyl (meth)acrylate.

Preferred oligomers are polyester (meth)acrylate oligomers and epoxy (meth)acrylate oligomers.

When the compositions are used for making varnishes, especially overprint varnishes, the (meth)acrylated oligomer used in the composition according to the invention, preferably has a viscosity, measured at 25 °C according to ASTM method D-2393-80, of 300000 to 1000000, more preferably from 600000 to 1000000, cps.

When the compositions are used for making UV-litho inks, the (meth)acrylated oligomer used in the composition according to the invention, preferably has a viscosity, measured at 25 °C according to ASTM method D-2393-80, of 400 to 125000, more preferably from 400 to 75000, most preferably from 400 to 36000, cps.

When the compositions are used for making UV-litho inks, preferred (meth)acrylated oligomers are those known as presenting a low oligomer tack and/or a good pigment wetting.

The radiation curable composition according to the present invention preferably comprises at least 2 % by weight of (meth)acrylated oligomer different from (meth)acrylic copolymer A, more preferably at least 5 % by weight. The quantity of (meth)acrylated oligomer does generally not exceed 40 %, preferably not 35 % by weight of the radiation curable composition.

The radiation curable composition can also contain lower molecular weight (meth)acrylated monomers as compound C, such as (meth)acrylic acid, beta-carboxyethyl acrylate, butyl(meth)acrylate, methyl(meth)acrylate, isobutyl (meth)acrylate, 2-ethylhexyl(meth)acrylate, cyclohexyl (meth)acrylate, n-hexyl (meth)acrylate, isobomyl (meth)acrylate, iso-octyl (meth)acrylate, n-lauryl (meth)acrylate, octyl/decyl (meth)acrylate, 2-hydroxyethyl(meth)acrylate, phenoxyethyl(meth)acrylate, nonylphenolethoxylate mono(meth)acrylate, 2-(-2-ethoxyethoxy)ethyl(meth)acrylate, 2-butoxyethyl (meth)acrylate, N-vinyl pyrrolidone, 1,6-hexanediol diacrylate (HDDA), di or tri propylene glycol diacrylate (DPGDA, TPGDA), ethoxylated and/or propoxylated neopentylglycoldi(meth)acrylate, pentaerythritoltriacrylate (PETIA) and the ethoxylated and/or propoxylated derivatives thereof, trimethylolpropanetri(meth)acrylate (TMPTA) and the ethoxylated and/or propoxylated derivatives thereof, di-trimethylolpropanetri(meth)acrylate (diTMPTA) glyceroltri(meth)acrylate and the ethoxylated and/or propoxylated derivatives thereof, bisphenol A di(meth)acrylate and the ethoxylated and/or propoxylated derivatives thereof, phenylglycidylether(meth)acrylate and the ethoxylated or/and propoxylated derivatives thereof, the (meth)acrylates obtained from the esterification with (meth)acrylic acid of aliphatic glycidyl ethers, especially those wherein the alkyl chain comprises from 6 to 24 carbon atoms, more preferably from 8 to 18 carbon atoms, and/or of glycidyl esters of saturated and unsaturated carboxylic acids, especially the glycidyl esters of long chain alkyl carboxylic acids wherein the alkyl chain comprises from 6 to 24 carbon atoms, more preferably from 8 to 18 carbon atoms.

If low molecular weight monomers are present in the composition according to the invention, their quantity is usually from 2 to 40 %, preferably from 3 to 35 % by weight of the composition.

The radiation curable composition used in the process according to the invention usually also contains at least one polymerization inhibitor. Inhibitors include without limitation substituted phenol compounds such as hydroquinone, methyl hydroquinone (THQ), monomethyl ether of hydroquinone (MEHQ), tert-butyl hydroquinone, di-tert-butyl hydroquinone, 2,6-di-tert-butyl-4-methylphenol (BHT), as well as phenothiazine (PTZ), triphenyl antimony (TPS), oxalic acid and any mixtures thereof.

The total amount of inhibitor used is generally from 0 to 1 % by weight, preferably from 0.01 to 0.5 % by weight of the composition.

The radiation curable compositions according to the invention may also comprise pigments, colorants, inert resins, fillers and/or other additives such as dispersing agents, surfactants, wetting agents, emulsifying agents, antioxidants, flow modification agents, slip agents, fire retardant agents, UV-protection agents, adhesion promoters and mixtures thereof. Inert resins include without limitation hydrocarbon resins, acrylic resins, aldehyde resins. The total amount of pigments, colorants, inert resins, fillers and/or additives generally does not exceed 60 % by weight, preferably it does not exceed 40 % by weight of the composition.

The radiation curable compositions may also comprise at least one photochemical initiator and/or chemical initiator, capable of initiating the polymerization of the radiation curable oligomer and optionally the other radiation curable compounds present therein. Photochemical initiators (also called photoinitiators) are compounds that can generate radicals by absorption of light, typically UV light. The photoinitiators are preferably free-radical photoinitiators. In some embodiments of the invention wherein the acrylated copolymer and/or the optional epoxy compound are not fully reacted, photoinitiators may also comprise cationic photoinitiators.

When cured under UV-light, curable compositions comprising at least one photoinitiator are preferred. The amount of photoinitiator or chemical initiator in the composition is preferably comprised between 0.001 and 20 wt%, more preferably between 0.01 and 10 wt%. The composition according to the invention may also comprise from 0 to 5 % by weight of one or more photosensitizers.

Alternatively, the compositions can be cured in the absence of an initiator, especially by electron beam radiation.

The radiation curable compositions according to the invention present good adhesion after curing on several substrates, such as paper and nonporous substrates, especially on flexible filimic and rigid plastic substrates.

The radiation curable compositions according to the invention provide good pigment wetting.

The radiation curable compositions according to the invention show a unique combination of rheology, flexibility and adhesion which permits to obtain inks and coatings showing a good pigment wetting, low ink tack, low misting and good adhesion. By inks is meant to understand liquid inks as well as paste inks. The radiation curable compositions according to the invention make it possible to achieve together, in a single energy curable 100% solids ink composition, excellent adhesion to polymeric substrates, high reactivity, lower misting and very good lithographic printing.

The present invention further relates to a process for the manufacturing of inks, varnishes, adhesives and coatings wherein a composition according to the invention as described here above is used. The present invention further relates to inks, varnishes, adhesives or coatings comprising a radiation curable composition according to the invention.

The present invention therefore also relates to a method for making coatings and printing comprising the steps of:
(a) providing a radiation curable composition as described here above,
(b) applying said composition onto a surface, and
(c) irradiating the surface with actinic or UV radiation or electron beams.

In the method according to the invention, the compositions can be applied to the surface by any coating technique, including the spray, curtain, dip, pad and roll-coating techniques, as well as any printing technique such as lithography, letterpress, serigraphy, rotary screen, flexography, digital, gravure and inkjet printing.

The substrate to be coated or printed can be any substrate, especially paper and polymeric substrates. The irradiation of the surface can be done by low energy electrons, actinic radiation, especially UV radiation.

The composition according to the invention is particularly suitable for making inks and overprint varnishes. The invention therefore further relates to a method of printing comprising a least one step wherein a substrate is printed with an ink or varnish comprising a radiation curable composition according to the invention, and curing the printed ink or varnish with low energy electrons, actinic radiation, especially UV radiation.

The printing can be done with any printing technology, especially with lithographic printing and flexographic printing. The compositions according to the invention are particularly suitable for making UV litho inks.

The invention also relates to the entirely or partially coated or printed substrates obtained with a printing ink, varnish or coating material comprising a radiation curable composition according to the invention. The present invention is illustrated by the following, non-limiting examples.

### Example 1:

111.73 g of glycidylester known as Cardura E-10P and 176.61 g of epoxidized soybean oil known as Drapex 6.8 are charged to a 2L three-necked round bottom flask and mixed. The flask headspace is then purged with nitrogen while the flask contents are heated to about 130°C under gentle agitation. Monomer premix 1 is prepared by charging 860.79 g of Octyl / Decyl Acrylate (available as ODA-N from Cytec Industries, Inc.), 6.739g of N-octyl mercaptan, 204.241g of glycidyl methacrylate, 40.279 g of methyl methacrylate, 0.0662g of hydroquinone, and 15.223g of polymerization initiator (Vazo 67 available from Dupont) to a beaker, and mixed until homogenous and solids fully dissolved. Monomer premix 1 is then charged to the reaction flask dropwise via addition funnel over 3 - 4hr maintaining temperature at about 130 - 140°C. Upon completion of the addition, the reaction mixture is held at about 130 - 140°C for another 1hr. Slow sparge with 5% Oxygen / 95% Nitrogen lean air is initiated, and 7.344 g of t-amyl peroxy-2-ethylhexanoate (TAPEH) is charged into the reaction mixture via syringe over about 3-5 min. The reaction mixture is held for about 45 - 60 minutes at about 130 - 140°C and then cooled to about 115°C. Hydroquinone (1.55 g) is charged to the reaction flask and allowed to dissolve. Monomer premix 2 is prepared by charging 173 g of acrylic acid and 1.55 g of catalyst (Hycat OA) to an addition funnel and mixing until homogeneous. Monomer premix 2 is then charged to the reaction flask over about 1 - 2hr, maintaining temperature at about 115°C. Reaction is allowed to continue at about 115°C until the acid value of the reaction mixture is about 2mg KOH/g and percent epoxide is about 0.2%. Adjustment of stoichiometry by addition of small quantity of acrylic acid or Cardura E-10P may be performed to balance and complete the reaction. The reaction mixture is then cooled to about 60 - 80°C and recovered in storage containers.

The composition obtained was a viscous liquid with a density of about 1.1 g/ml. The composition presented a Mn of 2005 and a Mw of 15256. The acrylated acrylic copolymer had a Mn of 11147 and Mw of 21378.

### Example 2:

800 g of the composition obtained in Example 1 was mixed with 200 g of a polyester acrylate under air sparge at a temperature of 80 °C for about 1 hour.

### Example 3:

A pigment dispersion was prepared by mixing 60 wt% of the composition obtained in Example 2 with 10 wt% of propoxylated glycerol triacrylate and 30 wt% of litho rubine pigment.

### Example 4:

A UV-litho ink was prepared by mixing 60 wt% of the pigment dispersion obtained from Example 3 with 24 wt% of the composition of Example 2, 4 wt% of diacrylated monomer, 2 wt% of talc and 10 wt% of photoinitiator.

The UV ink was tested by measuring reactivity (printed on absorbent substrate and cured with a 400 watts/inch lamp), adhesion on filmic substrates, ink tack and ink misting. Ink tack was measured on a Thwing-Albert Electronic Inkometer at 1200 RPM, 90°F and 1 minute according to ASTM D 4361. Misting was measured as the total color difference as an indication of the severity of ink misting or flying. A piece of white substrate is placed beneath the bottom roller of the inkometer for the duration of the tack measurement testing. Following the tack measurement, the ΔE or color difference is calculated by numerically comparing the color of the exposed substrate and a piece of unexposed substrate. A higher ΔE indicates more misting.

Reactivity is recorded as the minimal energy density required to achieve a mar free ink film. In this method, immediately after exposure to curing source, a finger is rubbed repeatedly across the ink film. Cure is the exposure density where there is no removal of ink onto the finger or marring of the ink surface.

Adhesion testing was performed on a variety of non porous substrates by tape test according to ASTM 3359 wit 3M's 600 and 610 tapes and Tessa's 4104 tape. Filmic substrates tested included polycarbonate, polyester, polypropylene, polystyrene and polyvinylchloride. For this testing, the ink was applied to substrates using a laboratory flat bed press and printing gage according to ASTM 6846. After curing the adhesion testing was completed.

The results obtained are presented in Table 1.

### Comparative Example 5R :

A UV-litho ink was prepared by mixing 60 wt% of a pigment dispersion comprising 60 wt% of a polyester acrylate, 10 wt% of propoxylated glycerol triacrylate and 30 wt% of litho rubine pigment, with 24 wt% of polyester acrylate, 4 wt% of diacrylated monomer, 2 wt% of talc and 10 wt% of photoinitiator.

The UV-ink was tested as in Example 4 and the results obtained are presented in Table 1.

### Comparative Example 6R:

A UV-litho ink was prepared as described in Comparative Example 5R except that the polyester acrylate was replaced with composition comprising a chlorinated polyester in 40% of acrylated monomer.

The UV-ink was tested as in Example 4 and the results obtained are presented in Table 1.

### Comparative Example 7R:

A UV-litho ink was prepared by mixing 60 wt% of the pigment dispersion described in Comparative Example 5R with 24 wt% of a composition comprising a non-acrylated acrylic copolymer diluted in 46% of acrylated monomer commercialized as EBECRYL®745, 4 wt% of diacrylated monomer, 2 wt% of talc and 10 wt% of photoinitiator.

The UV-ink was tested as in Example 4 and the results obtained are presented in Table 1.

### Comparative Example 8R:

A UV-litho ink was prepared by mixing 60 wt% of the pigment dispersion described in Comparative Example 5R with 24 wt% of a diluted acrylic copolymer comprising an acrylated acrylic copolymer which does not contain an alkyl(meth)acrylate having at least 6 carbon atoms in the alkyl chain an acrylic resin, 4 wt% of diacrylated monomer, 2 wt% of talc and 10 wt% of photoinitiator.

The UV-ink was tested as in Example 4 and the results obtained are presented in Table 1.

### Example 9:

Example 4 was repeated except that the composition of Example 2 was replaced by a composition comprising 600 g of the composition of Example 1 and 400 g of polyester acrylate.

The UV-ink was tested as in Example 4 and the results obtained are presented in Table 1.

### Example 10:

Example 4 was repeated except that the composition of Example 1 was replaced with a composition obtained as following: 55.7 g of glycidylester known as Cardura E-10P are charged to a 2L three-necked round bottom flask and stirred. The flask headspace is then purged with nitrogen while the flask contents are heated to about 130°C under gentle agitation. Monomer premix 1 is prepared by charging 429.163 g of Octyl / Decyl Acrylate (available as ODA-N from Cytec Industries, Inc.), 13.439 g of N-octyl mercaptan, 101.829 g of glycidyl methacrylate, 20.082 g of methyl methacrylate, 0.0290 g of hydroquinone, and 6.6 g of Vazo 67 to a beaker, and mixed until homogenous and solids fully dissolved. Monomer premix 1 is then charged to the reaction flask dropwise via addition funnel over 3 - 4hr maintaining temperature at about 130 - 140°C. Upon completion of the addition, the reaction mixture is held at about 130 - 140°C for another 1hr. Slow sparge with 5% Oxygen / 95% Nitrogen lean air is initiated, and 3.213 g of TAPEH is charged into the reaction mixture via syringe over about 3 - 5 min. The reaction mixture is held for about 45 - 60 minutes at about 130 - 140°C and then cooled to about 115°C. Hydroquinone (0.678 g) is charged to the reaction flask and allowed to dissolve. Monomer premix 2 is prepared by charging 68.14 g of acrylic acid and 1.067 g of Hycat OA to an addition funnel and mixing until homogeneous. Monomer premix 2 is then charged to the reaction flask over about 1 - 2hr, maintaining temperature at about 121 °C. Reaction is allowed to continue at about 121 °C until the acid value of the reaction mixture is about 2 mg KOH/g and percent epoxide is about 0.2%. The reaction mixture is then cooled to about 60 - 80°C and recovered in storage containers.

### The composition obtained was a viscous liquid with a density of about 1.1 g/ml.

The UV-ink was tested as in Example 4 and the results obtained are presented in Table 1.

### Example 11:

Example 4 was repeated except that the composition of Example 1 was replaced with a composition obtained as following : 58.153 g of glycidylester known as Cardura E-10P are charged to a 2L three-necked round bottom flask and stirred. The flask headspace is then purged with nitrogen while the flask contents are heated to about 130°C under gentle agitation. Monomer premix 1 is prepared by charging 413.446 g of 2-ethylhexyl acrylate, 14.03 g of N-octyl mercaptan, 106.308 g of glycidyl methacrylate, 20.965 g of methyl methacrylate, 0.0331 g of hydroquinone, and 7.611 g of Vazo 67 to a beaker, and mixed until homogenous and solids fully dissolved. Monomer premix 1 is then charged to the reaction flask dropwise via addition funnel over 3 - 4hr maintaining temperature at about 130 - 140°C. Upon completion of the addition, the reaction mixture is held at about 130 - 140°C for another 1 hr. Slow sparge with 5% Oxygen / 95% Nitrogen lean air is initiated, and 3.672 g of TAPEH is charged into the reaction mixture via syringe over about 3 - 5 min. The reaction mixture is held for about 45 - 60 minutes at about 130 - 140°C and then cooled to about 115°C. Hydroquinone (0.774 g) is charged to the reaction flask and allowed to dissolve. 91.928 g of epoxidized soybean oil is then charged to the reaction flsk and mixed until homogeneous. Monomer premix 2 is prepared by charging 81.859 g of acrylic acid and 1.219 g of Hycat OA to an addition funnel and mixing until homogeneous. Monomer premix 2 is then charged to the reaction flask over about 1 - 2hr, maintaining temperature at about 115°C. Reaction is allowed to continue at about 115°C until the acid value of the reaction mixture is about 2 mg KOH/g and percent epoxide is about 0.2%. The reaction mixture is then cooled to about 60 - 80°C and recovered in storage containers.

The composition obtained was a viscous liquid with a density of about 1.1 g/ml.

The UV-ink was tested as in Example 4 and the results obtained are presented in Table 1.

### Example 12:

Example 4 was repeated except that the composition of Example 1 was replaced with a composition obtained as following : 56.6 g of glycidylester known as Cardura E-10P are charged to a 2L three-necked round bottom flask and stirred. The flask headspace is then purged with nitrogen while the flask contents are heated to about 130°C under gentle agitation. Monomer premix 1 is prepared by charging 273.9 g of Octyl / Decyl Acrylate (available as ODA-N from Cytec Industries, Inc.), 201.1 g of 2-ethylhexylacrylate, 10.2 g of N-octyl mercaptan, 103.4 g of glycidyl methacrylate, 20.4 g of methyl methacrylate, 0.03 g of hydroquinone, and 7.6 g of Vazo 67 to a beaker, and mixed until homogenous and solids fully dissolved. Monomer premix 1 is then charged to the reaction flask dropwise via addition funnel over 3 - 4hr maintaining temperature at about 130 - 140°C. Upon completion of the addition, the reaction mixture is held at about 130 - 140°C for another 1hr. Slow sparge with 5% Oxygen / 95% Nitrogen lean air is initiated, and 7.344 g of TAPEH is charged into the reaction mixture via syringe over about 3 - 5 min. The reaction mixture is held for about 45 - 60 minutes at about 130 - 140°C and then cooled to about 115°C. Hydroquinone (0.8 g) is charged to the reaction flask and allowed to dissolve. 89.4 g of epoxidized soybean oil known as Drapex 6.8 are then charged to the reaction flask over 5-10 min and mixed until homogeneous. Monomer premix 2 is prepared by charging 87.6 g of glacial acrylic acid and 1.2 g of Hycat OA to an addition funnel and mixing until homogeneous. Monomer premix 2 is then charged to the reaction flask over about 1 - 2hr, maintaining temperature at about 115°C. Reaction is allowed to continue at about 115°C until the acid value of the reaction mixture is less than about 2 mg KOH/g and percent epoxide is less than about 0.2%. Adjustment of stoichiometry by addition of small quantity of acrylic acid or Cardura E-10P may be performed to balance and complete the reaction. The reaction mixture is then cooled to about 60 - 80°C and recovered in storage containers. The composition obtained was a viscous liquid with a density of about 1.1 g/ml. The composition presented a Mn of 1864 and a Mw of 9240.The acrylated acrylic copolymer had a Mn of 8545 and Mw of 13677.

The UV-ink was tested as in Example 4 and the results obtained are presented in Table 1.

### Example 13:

A UV-litho ink was prepared by mixing 60 wt% of the pigment dispersion described in Comparative Example 5R with 24 wt% of the composition of Example 2, 4 wt% of diacrylated monomer, 2 wt% of talc and 10 wt% of photoinitiator.

The UV-ink was tested as in Example 4 and the results obtained are presented in Table 1.

**Table 1**

| Example | Ink tack g-m | Ink misting ΔE | Reactivity mJ/m² | Tape Adhesion % |
|---|---|---|---|---|
| 4 | 19.0 | 2.5 | <75 | 100 |
| 5R | 19.3 | 3.3 | <60 | 0 |
| 6R | 14.4 | 5.0 | <60 | 0 |
| 7R | 38.9 | 17.7 | <60 | 0 |
| 8R | 13.9 | 19.4 | <60 | 0 |
| 9 | 17.0 | 2.0 | <60 | 100 |
| 10 | 14.6 | 6.4 | <60 | 100 |
| 11 | 15.9 | 2.4 | <60 | 100 |
| 12 | 13.5 | 2.0 | <60 | 100 |
| 13 | 19 | 3.1 | < 60 | 100 |

As can be seen from Table 1, the compositions according to the present invention permit to obtain inks which have lower ink tacks, less ink misting, significantly better adhesion to filmic substrates and good reactivity.

### Example 14 :

The UV ink described in example 4 was tested for its adhesion on various rigid non- porous substrates including polyester, polyethylene, polystyrene, high impact polystyrene and polyvinyl chloride according to the method described in Example 4.

The results obtained are described in Table 2.

### Example 15:

190.0 grams of the composition obtained in example 1 was blended with 10.0 grams of hydrocarbon resin for 2 hours at 102 °C. After 2 hours, this mixture was cooled to 60 °C and 20 g of a monofunctional epoxyacrylate monomer was added.

A UV-litho ink was prepared by mixing 24 wt% of this mixture with 60 wt% of the pigment dispersion described in Comparative example 5R, 4 wt % of diacrylate monomer, 2 wt % of talc and 10 wt. % of photoinitiator.

The UV ink was tested as in example 14 and the results obtained are presented in table 2.

### Example 16:

190.0 grams of the composition obtained in example 1 was blended with 20.0 grams of aldehyde resin for 2 hours at 102 °C. After 2 hours, this mixture was cooled to 60 °C and 20 g of a monofunctional epoxyacrylate monomer was added.

A UV-litho ink was prepared by mixing 24 wt% of this mixture with 60 wt% of the pigment dispersion described in Comparative example 5R, 4 wt % of diacrylate monomer, 2 wt % of talc and 10 wt. % of photoinitiator.

**Table 2**

| Example | Reactivity, mJ/cm2 | Tape Adhesion, % |
|---|---|---|
| 14 | < 75 | 35-50 |
| 15 | < 100 | 95-100 |
| 16 | < 100 | 90-100 |

The results obtained in Table 2 show the good adhesion of the compositions on rigid plastic substrates.

### Comparative Example 17R

A UV-screen ink was made by mixing 90 wt% of a pigment dispersion containing 82.5 wt% of a composition comprising a non-acrylated acrylic copolymer diluted in 46 wt% of acrylated monomer commercialized as EBECRYL®745, 11 wt% of 2-phenoxyethyl acrylate, 1.1 wt% of flow and leveling additive and 5 wt% of litho rubine pigment, with 5 wt% of photoinitiator, 5 wt% of amine synergist and 0.5 wt% of silica.

The UV-screen ink was tested by printing with a 355 mesh screen onto an absorbent substrate to measure reactivity. Additionally, the ink was printed onto polycarbonate, polyethylene, gycol modified polyethylene, polyester, polystyrene and polyvinylchloride substrates for adhesion testing.

The results obtained are presented in Table 3.

### Comparative Example 18R

Comparative Example 17 R was repeated except that composition commercialized as EBECRYL®745 was replaced with an epoxyacrylate commercialized as EBECRYL®3415.

### Example 19

Comparative Example 17 R was repeated except that composition commercialized as EBECRYL®745 was replaced with a composition obtained as following : 135.543 g of aliphatic glycidylether known as HELOXY™ Modifier 8 is charged to a 1L three-necked round bottom flask and mixed. The flask headspace is then purged with nitrogen while the flask contents are heated to about 130°C under gentle agitation. Monomer premix 1 is prepared by charging 437.247 g of Octyl / Decyl Acrylate, 3.423 g of N-octyl mercaptan, 103.747 g of glycidyl methacrylate, 20.46 g of methyl methacrylate, 0.0331 g of hydroquinone, and 7.611 g of Vazo 67 to a beaker, and mixed until homogenous and solids fully dissolved. Monomer premix 1 is then charged to the reaction flask dropwise via addition funnel over 3 - 4hr maintaining temperature at about 130 - 140°C. Upon completion of the addition, the reaction mixture is held at about 130 - 140°C for another 1hr. Slow sparge with 5% Oxygen / 95% Nitrogen lean air is initiated, and 3.672 g of TAPEH is charged into the reaction mixture via syringe over about 3-5 min. The reaction mixture is held for about 45 - 60 minutes at about 130 - 140°C and then cooled to about 115°C. Hydroquinone (0.774 g) is charged to the reaction flask and allowed to dissolve. Monomer premix 2 is prepared by charging 86.272 g of acrylic acid and 1.219 g of Hycat OA to an addition funnel and mixing until homogeneous. Monomer premix 2 is then charged to the reaction flask over about 1 - 2hr, maintaining temperature at about 121 °C. Reaction is allowed to continue at about 121 °C until the acid value of the reaction mixture is about 2 mg KOH/g and percent epoxide is about 0.2%. Adjustment of stoichiometry by addition of small quantity of acrylic acid or Heloxy Modifier 8 may be performed to balance and complete the reaction. The reaction mixture is then cooled to about 60 - 80°C and recovered in storage containers.

**Table 3**

| Example | Reactivity mJ/m² | Tape Adhesion % |
|---|---|---|
| 17R | 120 | 60-65 |
| 18R | 90 | 55-60 |
| 19 | 565 | 90-95 |

The results in Table 3 show the improved adhesion of the UV screen inks obtained with the compositions according to the invention over conventional UV screen inks.

### Example 20

205 g Cardura E-10P is charged to a 3L three-necked round bottom flask. One of the 3 rounds contains a direct cooler. The flask headspace is then purged with nitrogen while the flask content is heated to about 130°C under agitation. Monomer premix 1 is prepared by charging 150 g of glycidyl methacrylate, 850 g of styrene, 12 g of polymerization initiator 2,2'-Azobis(2-methylbutyronitrile), 63 g of chain transfer agent n-dodecyl mercaptan, 0.05 g hydroquinone to a beaker, and mixed until homogenous and solids fully dissolved. Monomer premix is then charged to the reaction flask dropwise via addition funnel over 2- 3hr maintaining temperature at about 135 - 140°C. Upon completion of the addition, the temperature of the reactor mixture is held over about 1 hour at 138-140°. 6 g of polymerization initiator tert-amyl peroxy(2- ethylhexanoate) (TAPEH or also known as luperox 575) is charged into the reaction mixture via syringe over about 3 - 5 min and is held at about 138 - 140°C for another 45 minutes. The reaction mixture is then cooled to about 95 - 100°C. Hydroquinone (1.2 g) is charged to the reaction flask and allowed to dissolve. Slow sparge with 5% Oxygen / 95% Nitrogen lean air is initiated. The reaction mixture is held for about 15 minutes at about 95 - 100°C. 351 g trimethylolpropane triacrylate (TMPTA) is charged to the reaction flask as dilution monomer. The reaction mixture is heated then till about 105°C. Monomer premix 2 is prepared by charging 137 g of acrylic acid and 1.8 g of catalyst (Hycat OA) to an addition funnel and mixing until homogeneous. Monomer premix 2 is then charged to the reaction flask over about 1 - 2hr, maintaining temperature at about 115°C. Reaction is allowed to continue at about 115°C until the acid value of the reaction mixture is < 4 mg KOH/g and percent epoxide is about 0.2%. Adjustment of stoichiometry by addition of small quantity of acrylic acid or Cardura E-10P may be performed to balance and complete the reaction. The reaction mixture is then cooled to about 60 - 80°C and recovered in storage containers.

## Claims

1. Process for the preparation of a radiation curable composition comprising at least one radiation curable (meth)acrylic copolymer A and at least one (meth)acrylated epoxy compound B, said process comprising:
- the preparation of a copolymer P by copolymerization of monomers comprising :
(iii) from 0.1 to 50 mole% of at least one epoxy (meth)acrylate (a1), and
(iv) from 50 to 99.9 mole% of at least one other copolymerizable monomer (m) different from epoxy (meth)acrylate (a1)
in the presence of at least one non-copolymerizable epoxy compound (b1) and
- further reacting copolymer P thereby obtained and the non-copolymerizable epoxy compound (b1) with at least one carboxylic (meth)acrylate (a3).

2. Process according to claim 1 wherein the epoxy (meth)acrylate (a1) is glycidyl(meth)acrylate.

3. Process according to claim 1 or 2 wherein the carboxylic (meth)acrylate (a3) is (meth)acrylic acid.

4. Process according to any of claims 1 to 3 wherein the other copolymerizable monomer (m) is selected from (meth)acrylates (m1), vinylic compounds (m2) and mixtures thereof.

5. Process according to claim 4 wherein the (meth)acrylate (m1) is selected from alkyl (meth)acrylates wherein the alkyl group comprises from 1 to 24 carbon atoms.

6. Process according to claim 4 or 5 wherein the vinylic compound (m2) is styrene.

7. Process according to any of claims 1 to 6 wherein the non-copolymerizable epoxy compound (b1) is selected from epoxidized olefins, epoxidized phenol-formaldehyde copolymers, epoxidized natural oils, mono- and polyglycidyl esters, mono- and polyglycidyl ethers and mixtures thereof.

8. Process according to claim 7 wherein the non-copolymerizable epoxy compound (b1) is selected from the monoglycidyl esters of long chain alkyl carboxylic acids wherein the alkyl chain comprises from 6 to 24 carbon atoms.

9. Process according to any preceding claim wherein:
(i) from 5 to 60 % by weight of non-copolymerizable epoxy compound (b1), and
(ii) from 40 to 95 % by weight of monomers comprising the epoxy (meth)acrylate (a1) and other copolymerizable monomer (m)
based on the total weight of non-copolymerizable epoxy compound (b1) and monomers comprising at least one epoxy (meth)acrylate (a1) and at least one other copolymerizable monomer (m) are used.

10. Process according to any preceding claim wherein the equivalent ratio of carboxylic (meth)acrylate (a3) to the total amount of epoxy groups provided by copolymer P and the non-copolymerizable epoxy compound (b1) is from 0.5 to 1.0.

11. Process according to any preceding claim comprising a step wherein at least one radiation curable compound C is added before and/or after the esterification step, partially or completely.

12. A radiation curable composition obtained by the process of any of claims 1 to 11 comprising:
(i) from 60 to 98 % by weight of (meth)acrylic copolymer A, and
(ii) from 2 to 40 % by weight of (meth)acrylated epoxy compound B based on the total weight of (meth)acrylic copolymer A and of (meth)acrylated epoxy compound B.

13. A radiation curable composition according to claim 12 comprising less than 1 % by weight of solvent based on the total weight of (meth)acrylic copolymer A and of (meth)acrylated epoxy compound B.

14. A radiation curable composition according to claim 12 or 13 comprising:
(i) from 15 to 95 % by weight of (meth)acrylic copolymer A, and
(ii) from 2 to 40 % by weight of (meth)acrylated epoxy compound B, and
(iii) from 2 to 40 % by weight of at least one radiation curable compound different from (meth)acrylic copolymer A and (meth)acrylated epoxy compound B based on the total weight of the composition.

15. Process for the manufacturing of inks, varnishes, adhesives and coatings wherein a composition according to any of claim 12 to 14 is used.

16. Inks, varnishes, adhesives or coatings comprising a radiation curable composition according to any of claim 12 to 14.

## Patentansprüche

1. Verfahren zur Herstellung einer strahlungshärtbaren Zusammensetzung, die mindestens ein strahlungshärtbares (Meth)acrylcopolymer A und mindestens eine (meth)acrylierte Epoxidverbindung B umfasst, wobei das Verfahren Folgendes umfasst:
- die Herstellung eines Copolymers P durch Copolymerisation von Monomeren, umfassend:
(iii) 0,1 bis 50 mol-% mindestens eines Epoxy-(meth)acrylats (a1) und
(iv) 50 bis 99,9 mol-% mindestens eines anderen copolymerisierbaren Monomers (m), das von dem Epoxy(meth)acrylat (a1) verschieden ist,
in Gegenwart mindestens einer nicht copolymerisierbaren Epoxidverbindung (b1) und
- die weitere Umsetzung des dadurch erhaltenen Copolymers P und der nicht copolymerisierbaren Epoxidverbindung (b1) mit mindestens einem Carboxyl(meth)acrylat (a3).

2. Verfahren nach Anspruch 1, bei dem es sich bei dem Epoxy (meth) acrylat (a1) um Glycidyl(meth)acrylat handelt.

3. Verfahren nach Anspruch 1 oder 2, bei dem es sich bei dem Carboxyl(meth)acrylat (a3) um (Meth)acrylsäure handelt.

4. Verfahren nach einem der Ansprüche 1 bis 3, bei dem man das andere copolymerisierbare Monomer (m) aus (Meth)acrylaten (m1), Vinylverbindungen (m2) und Mischungen davon auswählt.

5. Verfahren nach Anspruch 4, bei dem man das (Meth)acrylat (m1) aus Alkyl(meth)acrylaten mit 1 bis 24 Kohlenstoffatomen in der Alkylgruppe auswählt.

6. Verfahren nach Anspruch 4 oder 5, bei dem es sich bei der Vinylverbindung (m2) um Styrol handelt.

7. Verfahren nach einem der Ansprüche 1 bis 6, bei dem man die nicht copolymerisierbare Epoxidverbindung (b1) aus epoxidierten Olefinen, epoxidierten Phenol-Formaldehyd-Copolymeren, epoxidierten natürlichen Ölen, Mono- und Polyglycidylestern, Mono- und Polyglycidylethern und Mischungen davon auswählt.

8. Verfahren nach Anspruch 7, bei dem man die nicht copolymerisierbare Epoxidverbindung (b1) aus den Monoglycidylestern von langkettigen Alkylcarbonsäuren mit 6 bis 24 Kohlenstoffatomen in der Alkylkette auswählt.

9. Verfahren nach einem der vorhergehenden Ansprüche, bei dem man
(i) 5 bis 60 Gew.-% nicht copolymerisierbare Epoxidverbindung (b1) und
(ii) 40 bis 95 Gew.-% Monomere, die das Epoxy(meth)acrylat (a1) und das andere copolymerisierbare Monomer (m) umfassen, bezogen auf das Gesamtgewicht von nicht copolymerisierbarer Epoxidverbindung (b1) und Monomeren, die mindestens ein Epoxy(meth)acrylat (a1) und mindestens ein anderes copolymerisierbares Monomer (m) umfassen, verwendet.

10. Verfahren nach einem der vorhergehenden Ansprüche, bei dem das Äquivalentverhältnis von Carboxyl-(meth)acrylat (a3) zur Gesamtmenge der durch das Copolymer P und die nicht copolymerisierbare Epoxidverbindung (b1) bereitgestellten Epoxidgruppen 0,5 bis 1,0 beträgt.

11. Verfahren nach einem der vorhergehenden Ansprüche, das einen Schritt umfasst, bei dem man vor und/oder nach dem Veresterungschritt teilweise oder vollständig mindestens eine strahlungshärtbare Verbindung C zugibt.

12. Strahlungshärtbare Zusammensetzung, erhalten nach dem Verfahren nach einem der Ansprüche 1 bis 11, umfassend:
(i) 60 bis 98 Gew.-% (Meth)acrylcopolymer A und
(ii) 2 bis 40 Gew.-% (meth)acrylierte Epoxidverbindung B,
bezogen auf das Gesamtgewicht von (Meth)acrylcopolymer A und(meth)acrylierter Epoxidverbindung B.

13. Strahlungshärtbare Zusammensetzung nach Anspruch 12, umfassend weniger als 1 Gew.-% Lösungsmittel, bezogen auf das Gesamtgewicht von (Meth)acrylcopolymer A und (meth)acrylierter Epoxidverbindung B.

14. Strahlungshärtbare Zusammensetzung nach Anspruch 12 oder 13, umfassend:
(i) 15 bis 95 Gew.-% (Meth)acrylcopolymer A und
(ii) 2 bis 40 Gew.-% (meth)acrylierte Epoxidverbindung B und
(iii) 2 bis 40 Gew.-% mindestens einer strahlungshärtbaren Verbindung, die von dem (Meth)acrylcopolymer A und der (meth)acrylierten Epoxidverbindung B verschieden ist,
bezogen auf das Gesamtgewicht der Zusammensetzung.

15. Verfahren zur Herstellung von Tinten, Lacken, Klebstoffen und Beschichtungen, bei dem man eine Zusammensetzung nach einem der Ansprüche 12 bis 14 verwendet.

16. Tinten, Lacke, Klebstoffe oder Beschichtungen, umfassend eine strahlungshärtbare Zusammensetzung nach einem der Ansprüche 12 bis 14.

## Revendications

1. Procédé de préparation d'une composition durcissable par rayonnement comprenant au moins un copolymère (méth)acrylique durcissable par rayonnement A et au moins un composé époxy (méth)acrylé B, ledit procédé comprenant :
- la préparation d'un copolymère P par copolymérisation de monomères comprenant :
(iii) de 0,1 à 50 % en moles d'au moins un (méth)acrylate d'époxy (a1), et
(iv) de 50 à 99,9 % en moles d'au moins un autre monomère copolymérisable (m) différent du (méth)acrylate d'époxy (a1)
en présence d'au moins un composé époxy non copolymérisable (b1) et
- en outre, la réaction du copolymère P ainsi obtenu et du composé époxy non copolymérisable (b1) avec au moins un (méth)acrylate carboxylique (a3).

2. Procédé selon la revendication 1 dans lequel le (méth)acrylate d'époxy (a1) est le (méth)acrylate de glycidyle.

3. Procédé selon la revendication 1 ou 2 dans lequel le (méth)acrylate carboxylique (a3) est l'acide (méth)acrylique.

4. Procédé selon l'une quelconque des revendications 1 à 3 dans lequel l'autre monomère copolymérisable (m) est choisi parmi les (méth)acrylates (m1), les composés vinyliques (m2) et les mélanges de ceux-ci.

5. Procédé selon la revendication 4 dans lequel le (méth)acrylate (m1) est choisi parmi les (méth)acrylates d'alkyle dans lesquels le groupe alkyle comprend de 1 à 24 atomes de carbone.

6. Procédé selon la revendication 4 ou 5 dans lequel le composé vinylique (m2) est le styrène.

7. Procédé selon l'une quelconque des revendications 1 à 6 dans lequel le composé époxy non copolymérisable (b1) est choisi parmi les oléfines époxydées, les copolymères phénol-formaldéhyde époxydés, les huiles naturelles époxydées, les esters mono- et polyglycidyliques, les éthers mono- et polyglycidyliques et les mélanges de ceux-ci.

8. Procédé selon la revendication 7 dans lequel le composé époxy non copolymérisable (b1) est choisi parmi les esters monoglycidyliques d'acides alkylcarboxyliques à longue chaîne dans lesquels la chaîne alkyle comprend de 6 à 24 atomes de carbone.

9. Procédé selon l'une quelconque des revendications précédentes dans lequel :
(i) de 5 à 60 % en poids de composé époxy non copolymérisable (b1), et
(ii) de 40 à 95 % en poids de monomères comprenant le (méth)acrylate d'époxy (a1) et l'autre monomère copolymérisable (m),
rapporté au poids total du composé époxy non copolymérisable (b1) et des monomères comprenant au moins un (méth)acrylate d'époxy (a1) et au moins un autre monomère copolymérisable (m), sont utilisés.

10. Procédé selon l'une quelconque des revendications précédentes dans lequel le rapport équivalents du (méth)acrylate carboxylique (a3) à la quantité totale de groupes époxy apportés par le copolymère P et le composé époxy non copolymérisable (b1) est de 0,5 à 1,0.

11. Procédé selon l'une quelconque des revendications précédentes comprenant une étape dans laquelle au moins un composé durcissable par rayonnement C est ajouté avant et/ou après l'étape d'estérification, partiellement ou complètement.

12. Composition durcissable par rayonnement obtenu par le procédé de l'une quelconque des revendications 1 à 11 comprenant :
(i) de 60 à 98 % en poids de copolymère (méth)acrylique A, et
(ii) de 2 à 40 % en poids de composé époxy (méth)acrylé B,
rapporté au poids total de copolymère (méth)acrylique A et de composé époxy (méth)acrylé B.

13. Composition durcissable par rayonnement selon la revendication 12 comprenant moins de 1 % en poids de solvant, rapporté au poids total de copolymère (méth)acrylique A et de composé époxy (méth)acrylé B.

14. Composition durcissable par rayonnement selon la revendication 12 ou 13 comprenant :
(i) de 15 à 95 % en poids de copolymère (méth)acrylique A, et
(ii) de 2 à 40 % en poids de composé époxy (méth)acrylé B, et
(iii) de 2 à 40 % en poids d'au moins un composé durcissable par rayonnement différent du copolymère (méth)acrylique A et du composé époxy (méth)acrylé B, rapporté au poids total de la composition.

15. Procédé de fabrication d'encres, vernis, adhésifs et revêtements dans lequel une composition selon l'une quelconque des revendications 12 à 14 est utilisée.

16. Encres, vernis, adhésifs ou revêtements comprenant une composition durcissable par rayonnement selon l'une quelconque des revendications 12 à 14.
